# EUROPÄISCHE PATENTSCHRIFT

(11) **EP 1 801 141 B1**
(45) Veröffentlichungstag und Bekanntmachung des Hinweises auf die Patenterteilung: **23.02.2011**
(21) Anmeldenummer: 06025302.8
(22) Anmeldetag: 07.12.2006
(51) Int. Cl.: C08G 18/79, C09D 175/06, C08G 18/22, C08G 18/12, C08G 18/42

(54) **Verfahren zur Herstellung von Polyadditionsverbindungen**
Process for the preparation of polyaddition compounds
Procédé pour la préparation de composés de polyaddition

(30) Priorität: 20.12.2005 DE 102005060828
(43) Veröffentlichungstag der Anmeldung: 27.06.2007
(73) Patentinhaber: Bayer MaterialScience AG, 51368 Leverkusen (DE)
(72) Erfinder: Laas, Hans-Josef, Dr., 51519 Odenthal (DE); Sojka, Bernd, Dr., 50733 Köln (DE); Grahl, Michael, 51371 Leverkusen (DE); Sanders, Josef, Dr., 51375 Leverkusen (DE); Fischer, Wolfgang, Dr., 40668 Meerbusch (DE); Halpaap, Reinhard, Dr., 51519 Odenthal (DE)

(56) Entgegenhaltungen:
- EP-A1- 0 761 705
- EP-A1- 1 231 232
- EP-A2- 0 269 943
- WO-A-2004/056903
- WO-A-2004/058845
- WO-A-2006/100144

## Beschreibung

Die vorliegende Erfindung betrifft ein neues Verfahren zur Herstellung von Polyadditionsprodukten, die nach diesem Verfahren erhältlichen Produkte sowie deren Verwendung als Ausgangskomponenten bei der Herstellung von Polyurethankunststoffen.

Als blockierungsmittelfreie Vernetzer für hoch wetterbeständige Polyurethan(PUR)-Pulverlacke finden in zunehmendem Maße Uretdiongruppen aufweisende Polyadditionsverbindungen Verwendung. Als Vernetzungsprinzip wird bei diesen Verbindungen die thermische Rückspaltung der Uretdionstrukturen in freie Isocyanatgruppen und deren anschließende Reaktion mit einem hydroxyfunktionellen Bindemittel genutzt.

Die Herstellung Uretdiongruppen enthaltender Pulverlackvemetzer ist lange bekannt. Sie erfolgt in der Regel durch Umsetzung uretdiongruppenhaltiger Polyisocyanate bzw. Polyisocyanatgemische mit difunktionellen und gegebenenfalls monofunktionellen, gegenüber Isocyanaten reaktive Gruppen tragenden Verbindungen. Diese Umsetzung kann diskontinuierlich oder in einem kontinuierlichen Prozess, beispielsweise in speziellen Apparaturen, wie z. B. Intensivknetern oder statischen Mischern, durchgeführt werden und wird dabei vorzugsweise durch Mitverwendung geeigneter Katalysatoren beschleunigt. EP-A 0 045 994 und EP-A 0 045 998 beschreiben beispielsweise die Verwendung von Zinn(II)- und Zinn(IV)-Verbindungen, wie z. B. Zinn(II)-acetat, Zinn(II)-octoat, Zinn(II)-laurat, Dibutylzinn(IV)-diacetat, Dibutylzinn(IV)-dilaurat (DBTL), Dibutylzinn-(IV)-maleat oder Dioctylzinn(IV)-diacetat, als Katalysatoren bei der Herstellung uretdiongruppenhaltiger Polyadditionsprodukte. EP-A 1 083 209 nennt neben den Zinnverbindungen Zinn(II)-ethylcaproat und Zinn(II)-palmitat auch Zink-Verbindungen, wie z. B. Zinkchlorid und Zink-2-ethylcaproat, Metallsalze, wie z. B. Eisen(III)-chlorid oder Molybdänglykolat, und tert. Amine, wie z. B. Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan und N,N'-Dimethylpiperazin, als geeignete Katalysatoren zur Beschleunigung der Urethanisierungsreaktion.

Die heute kommerziell verfügbaren Uretdionpulverlackvernetzer werden in der Regel unter DBTL-Katalyse hergestellt.

Ein Hauptanwendungsgebiet für Uretdionpulverlackvernetzer sind Pulverlacke, die bei der Aushärtung matte oder semi-matte Oberflächen ergeben. Solche Pulvermattlacke dienen beispielsweise zur Beschichtung von Büromöbeln, Elektro- und Elektronikgeräten, Haushaltsgeräten oder Kfz-Anbauteilen. Auch für die Beschichtung von Fassadenteilen sind glänzende, stark reflektierende Lacksysteme häufig unerwünscht.

Eine gängige Methode zur Formulierung von Polyurethanpulvermattlacken besteht in der gemeinsamen Extrusion ("one-shot-Verfahren") zweier hydroxyfunktioneller Polyester-Pulver-Bindemittel, die stark unterschiedliche OH-Zahlen und damit unterschiedliche Reaktivitäten aufweisen, mit einem Uretdionpulverlackvemetzer auf IPDI-Basis (siehe z. B.: P. Thometzek et al.: "Tailor-made Polyurethane Powders for High-quality Coatings", PCE Powder Coating Europe 2000, Amsterdam, The Netherlands, January 19 - 20, 2000). In Abhängigkeit von Art und Mengenverhältnis der eingesetzten Polyole lassen sich sicher und reproduzierbar Pulverbeschichtungen mit ausgezeichnetem Verlauf und 60°-Glanzwerten von 15 bis 20 % erhalten, die die von Polyurethanpulverlacken bekannt guten mechanischen und chemischen Beständigkeiten zeigen.

Unter Verwendung der im Markt verfügbaren Uretdionpulverlackhärter lassen sich nach diesem Prinzip in Kombination mit ausgewählten Bindemittelkomponenten sogar Pulverlacke mit 60°-Glanzwerten von unter 10 % formulieren. Diese speziellen Formulierungen sind allerdings merklich anfällig gegenüber bereits geringen Qualitätsschwankungen der eingesetzten Rohstoffe und hinsichtlich ihres Glanzgrades oft nur schwer reproduzierbar.

Aufgabe der vorliegenden Erfindung war es daher, neue Uretdiongruppen aufweisende Polyadditionsverbindungen zur Verfügung zu stellen, aus denen sich in Kombination mit zwei Polyesterpolyolen unterschiedlicher Reaktivität nach dem "one-shot-Verfahren" Pulverlacke formulieren lassen, die zu Beschichtungen von deutlich niedrigerem Glanz führen, als dies mit den bisher bekannten Uretdionpulverlackhärtem möglich war und auf diese Weise auch für extrem matten Pulverlackformulierungen eine ausreichende Reproduktionssicherheit gewährleisten.

Diese Aufgabe konnte nun mit der Bereitstellung des neuen, nachfolgend näher beschriebenen Verfahrens und der nach diesem Verfahren erhältlichen neuen Produkte gelöst werden. Das nachfolgend näher beschriebene erfindungsgemäße Verfahren basiert auf der überraschenden Beobachtung, dass blockierungsmittelfreie Uretdionpulverlackvernetzer, die in Gegenwart von Wismut enthaltenden Katalysatoren hergestellt wurden, nach gemeinsamer Extrusion mit zwei Pulverlackbindemitteln unterschiedlicher OH-Zahl Pulverlacke ergeben, die zu einem deutlich niedrigeren Glanz führen als die bisher verfügbaren, unter DBTL-Katalyse hergestellten Uretdionpulverlackvemetzer gleicher Bruttozusammensetzung in der gleichen Lackformulierung.

Gegenstand der vorliegenden Erfindung ist ein Verfahren zur Herstellung uretdiongruppenhaltiger Polyadditionsprodukte durch Umsetzung von
A) Uretdiongruppen aufweisenden Polyisocyanaten einer mittleren Isocyanatfunktionalität von mindestens 2,0, gegebenenfalls unter Mitverwendung von
B) weiteren Diisocyanaten und/oder Polyisocyanaten in einer Menge von bis zu 70 Gew.-%, bezogen auf das Gesamtgewicht der Komponenten A) und B), mit
C) Gemischen von Polyolen, wobei es sich um gemische von Polyesterdiolen des Molekulargewischtsbereichs 134 bis 1200 unit bis zu 80 gew.-%, berogen auf das Gesamtgewicht der eingesetzten Polyole C), an einfachen Diolen des Molekulargewichtsbereichs 62 bis 300 handelt und gegebenenfalls
D) weiteren gegenüber Isocyanatgruppen reaktiven, monofunktionellen Verbindungen in einer Menge von bis zu 40 Gew.-%, bezogen auf das Gesamtgewicht der Komponenten C) und D),
unter Einhaltung eines Äquivalentverhältnisses von Isocyanatgruppen zu gegenüber Isocyanaten reaktiven Gruppen von 1,8:1 bis 0,6:1, **dadurch gekennzeichnet, dass** man die Umsetzung in Gegenwart mindestens eines Wismut enthaltenden Katalysators durchführt.

Hierbei ist es erstaunlich, dass nur mit den erfindungsgemäß unter Verwendung von Wismuthaltigen Katalysatoren hergestellten Uretdionpulverlackvernetzern Lackschichten erhalten werden können, die in reproduzierbarer Form einen bisher nicht erreichbaren Mattheitsgrad von Pulverlacken erreichbar machen. Diese Eigenschaft ist bisher nicht mit detektierbaren Stoffparametern des Vernetzers zu korrelieren.

Gegenstand der Erfindung sind auch die nach diesem Verfahren erhältlichen uretdiongruppenhaltigen Polyadditionsprodukte sowie deren Verwendung als Ausgangskomponenten bei der Herstellung von Polyurethankunststoffen, insbesondere als Vernetzerkomponenten in hitzehärtbaren Polyurethanpulverlacken.

Gegenstand der Erfindung ist schließlich auch die Verwendung der erfindungsgemäß erhältlichen uretdiongruppenhaltigen Polyadditionsprodukte in Kombination mit mindestens einem Polyol einer OH-Zahl von 20 bis 40 mg KOH/g und mindestens einem Polyol einer OH-Zahl von 200 bis 300 mg KOH/g zur Herstellung von Pulverbeschichtungen mit matter Oberfläche.

Ausgangsverbindungen A) für das erfindungsgemäße Verfahren sind beliebige Uretdiongruppen aufweisende Polyisocyanate einer mittleren Isocyanatfunktionalität von mindestens 2,0, wie sie sich in an sich bekannter Weise durch katalytische Dimerisierung eines Teils der Isocyanatgruppen einfacher Diisocyanate und vorzugsweise sich anschließende Abtrennung des nicht umgesetzten Diisocyanatüberschusses, beispielsweise durch Dünnschichtdestillation, erhalten lassen. Zur Herstellung der Ausgangsverbindungen A) sind beliebige Diisocyanate mit aliphatisch, cycloaliphatisch, araliphatisch und/oder aromatisch gebundenen Isocyanatgruppen geeignet, die nach beliebigen Verfahren, z. B. durch Phosgenierung oder auf phosgenfreiem Weg, beispielsweise durch Urethanspaltung, hergestellt werden können. Geeignete Ausgangsdiisocyanate sind beispielsweise solche des Molekulargewichtsbereiches 140 bis 400, wie z. B. 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan, 4,4'-Diisocyanato-3,3-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetramethyl-1,1'-bi(cyclohexyl), 1,8-Diisocyanato-p-menthan, 1,3-Diisocyanatoadamantan, 1,3-Dimethyl-5,7-diisocyanatoadamantan, 1,3-und 1,4-Bis(1-isocyanato-1-methylethyl)-benzol (TMXDI), Bis(4-(1-isocyanato-1-methylethyl)phenyl)-carbonat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat sowie beliebige Gemische solcher Diisocyanate. Weitere ebenfalls geeignete Diisocyanate finden sich darüberhinaus beispielsweise in Justus Liebigs Annalen der Chemie Band 562 (1949) S. 75 -136.

Als Katalysatoren zur Herstellung der Ausgangsverbindungen A) aus den genannten Diisocyanaten sind grundsätzlich alle die Dimerisierung von Isocyanatgruppen katalysierenden Verbindungen geeignet, wie z. B. tertiäre organische Phosphine der in der US-A 4 614 785, Kolonne 4, Zeilen 11 bis 47, oder DE-A 1 934 763 und 3 900 053 genannten Art, Tris-(dialkylamino)-phosphine der in der DE-A 3 030 513, DE-A 3 227 779 und DE-A 3 437 635 genannten Art, substituierte Pyridine der in der DE-A 1 081 895 und DE-A 3 739 549 genannten Art, Azolate der in WO 02/092657, WO 03/093246 und WO 04/005364 genannten Art oder substituierte Imidazole oder Benzimidazole der in der EP-A 0 417 603 genannten Art.

Bevorzugte Ausgangsverbindungen A) für das erfindungsgemäße Verfahren sind Uretdiongruppen aufweisende Polyisocyanate auf Basis von Diisocyanaten mit aliphatisch und/oder cycloaliphatisch gebundenen Isocyanatgruppen der oben beispielhaft genannten Art oder Gemische solcher Polyisocyanate.

Besonders bevorzugt ist die Verwendung von Uretdiongruppen aufweisenden Polyisocyanaten auf Basis von HDI, IPDI, 2,4'-Diisocyanatodicyclohexylmethan und/oder 4,4'-Diisocyanatodicyclohexylmethan.

Bei der an sich bekannten Herstellung der Uretdiongruppen aufweisenden Polyisocyanate durch katalytische Dimerisierung der beispielhaft genannten Diisocyanate erfolgt oftmals in untergeordnetem Umfang gleichzeitig mit der Dimerisierungsreaktion eine Trimerisierungsreaktion unter Bildung von höher als difunktionellen, Isocyanuratgruppen aufweisenden Polyisocyanaten, was zur Folge hat, dass die mittlere NCO-Funktionalität der Komponente A), bezogen auf die freien NCO-Gruppen, vorzugsweise bei 2,0 bis 2,5 liegt.

Gegebenenfalls können beim erfindungsgemäßen Verfahren weitere Diisocyanate und/oder Polyisocyanate B) mitverwendet werden. Hierbei handelt es sich beispielsweise um die oben beschriebenen, zur Herstellung der Ausgangsverbindungen A) geeigneten monomeren Diisocyanate mit aliphatisch, cycloaliphatisch, araliphatisch und/oder aromatisch gebundenen Isocyanatgruppen oder beliebige Gemische solcher Diisocyanate, sowie durch Modifizierung dieser monomeren Diisocyanate hergestellte Polyisocyanate mit Isocyanurat-, Urethan-, Allophanat-, Biuret- und/oder Oxadiazintrionstruktur, wie sie beispielsweise in den DE-A 1 670 666, DE-A 3 700 209, DE-A 3 900 053, EP-A 0 336 205 und EP-A 0 339 396 beispielhaft beschrieben sind.

Diese Diisocyanate und/oder Polyisocyanate B) werden, falls überhaupt, in Mengen von bis zu 70 Gew.-%, vorzugsweise bis zu 50 Gew.-%, bezogen auf das Gesamtgewicht der Komponenten A) und B) mitverwendet.

Für das erfindungsgemäße Verfahren geeignete Gemische an Ausgangskomponenten A) und B) stellen auch Lösungen von Uretdiongruppen aufweisenden Polyisocyanaten in monomeren Diisocyanaten dar, wie man sie bei der oben beschriebenen Herstellung der Ausgangsverbindungen A) erhält, wenn man nach anteiliger katalytischer Dimerisierung auf die Abtrennung der überschüssigen, nicht umgesetzten Diisocyanate verzichtet. In diesem Fall kann der Anteil der Diisocyanate B) an der Gesamtmenge der Ausgangskomponenten A) und B) auch bis zu 70 Gew.-% betragen.

Bevorzugte Ausgangskomponenten B), wie sie gegebenenfalls beim erfindungsgemäßen Verfahren mitverwendet werden können, stellen Diisocyanate und Polyisocyanate mit aliphatisch und/oder cycloaliphatisch gebundenen Isocyanatgruppen dar. Besonders bevorzugt ist die Verwendung von monomerem HDI, IPDI und/oder 4,4'-Diisocyanatodicyclohexylmethan oder Polyisocyanaten aus diesen Diisocyanaten mit Isocyanuratstruktur.

Geeignete einfache Diole des Molekulargewichtsbereiches 62 bis 300 der Komponente C) sind z. B. 1,2-Ethandiol, 1,2- und 1,3-Propandiol, die isomeren Butandiole, Pentandiole, Hexandiole, Heptandiole und Octandiole, 1,10-Decandiol, 1,12-Dodecandiol, 1,2-und 1,4-Cyclohexandiol, 1,4-Cyclohexandimethanol oder 4,4'-(1-Methylethyliden)-biscyclohexanol, aber auch einfache Ester- oder Etherdiole wie z. B. Hydroxypivalinsäureneopentylglykolester, Diethylenglykol oder Dipropylenglykol.

Als Polyolkomponenten C) geeignete Polyesterdiole sind beispielsweise solche wie sie sich in an sich bekannter Art und Weise durch Umsetzung von mehrwertigen Alkoholen, beispielsweise einfachen mehrwertigen Alkoholen des Molekulargewichtsbereiches 62 bis 400, wie z. B. 1,2-Ethandiol, 1,2- und 1,3-Propandiol, die isomeren Butandiole, Pentandiole, Hexandiole, Heptandiole und Octandiole, 1,10-Decandiol, 1,12-Dodecandiol, 1,2- und 1,4-Cyclohexandiol, 1,4-Cyclohexandimethanol oder 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat aber auch einfachen Ester- oder Etheralkohole, wie z. B. Hydroxypivalinsäureneopentylglykolester, Diethylenglykol oder Dipropylenglykol, mit unterschüssigen Mengen an mehrwertigen Carbonsäuren, entsprechenden Carbonsäureanhydriden, entsprechenden Polycarbonsäureestern von niederen Alkoholen oder Lactonen herstellen lassen.

Die zur Herstellung der Polyesterdiole verwendeten Säuren oder Säurederivate können aliphatischer, cycloaliphatischer und/oder aromatischer Natur sein und gegebenenfalls, z. B. durch Halogenatome, substituiert und/oder ungesättigt sein. Beispiele geeigneter Säuren sind beispielsweise mehrwertige Carbonsäuren des Molekulargewichtsbereichs 118 bis 300 oder deren Derivate wie beispielsweise Bernsteinsäure, Adipinsäure, Sebacinsäure, Phthalsäure, Isophthalsäure, Terephthalsäure, Trimellithsäure, Phthalsäureanhydrid, Tetrahydrophthalsäure, Hexahydrophthalsäure, Maleisäure, Maleinsäureanhydrid, dimere und trimere Fettsäuren, Terephthalsäuredimethylester und Terephthalsäure-bis-glykolester.

Zur Herstellung der Polyesterdiole können auch beliebige Gemische dieser beispielhaft genannten Ausgangsverbindungen eingesetzt werden.

Eine als Polyolkomponente C) bevorzugt eingesetzte Art von Polyesterdiole sind solche, wie sie sich in an sich bekannter Weise aus Lactonen und einfachen mehrwertigen Alkoholen, wie z. B. den oben beispielhaft genannten, als Startermolekülen unter Ringöffnung herstellen lassen. Geeignete Lactone zur Herstellung dieser Polyesterpolyole sind beispielsweise β-Propiolacton, γ-Butyrolacton, γ- und δ-Valerolacton, ε-Caprolacton, 3,5,5- und 3,3,5-Trimethylcaprolacton oder beliebige Gemische solcher Lactone.

Beim erfindungsgemäßen Verfahren können gegebenenfalls auch noch weitere gegenüber Isocyanatgruppen reaktive monofunktionelle Verbindungen D) mitverwendet werden. Hierbei handelt es sich insbesondere um einfache aliphatische bzw. cycloaliphatische Monoamine, wie Methylamin, Ethylamin, n-Propylamin, Isopropylamin, die isomeren Butylamine, Pentylamine, Hexylamine und Octylamine, n-Dodecylamin, n-Tetradecylamin, n-Hexadecylamin, n-Octadecylamin, Cyclohexylamin, die isomeren Methylcyclohexylamine sowie Aminomethylcyclohexan, sekundäre Monoamine, wie Dimethylamin, Diethylamin, Dipropylamin, Diisopropylamin, Dibutylamin, Diisobutylamin, Bis(2-ethylhexyl)-amin, N-Methyl- und N-Ethylcyclohexylamin sowie Dicyclohexylamin oder Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole sowie Hydroxymethylcyclohexan.

Diese monofunktionellen Verbindungen D) kommen, falls überhaupt, in Mengen von bis zu 40 Gew.-%, vorzugsweise 25 Gew.-%, bezogen auf die Gesamtmenge an gegenüber Isocyanaten reaktiven Ausgangsverbindungen C) und D) zum Einsatz.

Bevorzugte Ausgangsverbindungen D) für das erfindungsgemäße Verfahren sind die einfachen aliphatischen oder cycloaliphatischen Monoalkohole der genannten Art.

Beim erfindungsgemäßen Verfahren werden die Uretdiongruppen aufweisenden Polyisocyanate A), gegebenenfalls unter Mitverwendung weiterer Diisocyanate und/oder Polyisocyanate B), mit den Polyolen C) und gegebenenfalls weiteren gegenüber Isocyanaten reaktiven, monofunktionellen Verbindungen D) in Gegenwart mindestens eines Wismut enthaltenden Katalysators umgesetzt.

Bei diesen Katalysatoren handelt es sich um beliebige anorganische oder organische Verbindungen des Wismuts, beispielsweise Wismut(III)-oxid, Wismut(III)-sulfid, Wismut(III)-nitrat, basisches Wismut(III)-carbonat, Wismut(III)-sulfat, Wismut(III)-phosphat, Wismut(III)-molybdat, Wismut(III)-vanadat, Wismut(III)-titanat, Wismut(III)-zirkonat, Wismut-borat, Wismut-halogenide, wie z. B. Wismut(III)-chlorid, Wismut(III)-bromid, Wismut(III)-jodid, Wismut(III)- und Wismut(V)-fluorid, Wismut(III)-oxidhalogenide, wie z. B. Wismut(III)-oxidchlorid, Wismut(III)-oxidjodid und Wismut(III)-oxidfluorid, Natrium-bismutat, Wismut(III)-carboxylate, wie z. B. Wismut(III)-acetat, Wismut(III)-2-ethylhexanoat, Wismut(III)-octoat, Wismut(III)-neodecanoat, Wismut(III)-oleat, Wismut(III)-subgallat, Wismut-subsalicylat, Wismut-lactat, Wismut(III)-citrat, Wismut-benzoat, Wismut-oxalat, Wismut-succinat und Wismut-tartrate, Wismut(III)-acetat-oxid, Wismut(III)-trifluormethansulfonat, Wismut(III)-2,2,6,6-tetramethyl-3,5-heptandionat, Wismut-(III)-hexafluoroacetylacetonat, Wismut-β-naphthol, Trimethylwismut, Tributylwismut, Triphenylwismut, Diphenylmethylwismut, Tris-(2-methoxyphenyl)-wismut, Tris(4-ethoxyphenyl)wismut, Tris(4-tolyl)wismut, Wismut-2-ethylhexan-diisopropoxid, Bis(2-ethylhexyloxy)wismut-isopropoxid, Wismut(III)-tert-pentoxid, Wismut-ethoxid, Wismut-N-propoxid, Wismut-isopropoxid, Wismut-N-butoxid, Wismut-2-methoxyethoxid, Triphenylwismutdiacetat, Triphenylwismut-dichlorid, Tris(2-methoxyphenyl)wismut-dichlorid, Triphenylwismut-carbonat, Wismut-N,N-dimethyldithiocarbamat oder beliebige Gemische solcher Verbindnungen.

Bevorzugte Katalysatoren sind Wismut(III)-carboxylate der oben beispielhaft genannten Art, insbesondere Wismut-Salze aliphatischer Monocarbonsäuren mit bis zu 16 Kohlenstoffatomen im aliphatischen Rest. Ganz besonders bevorzugt ist die Verwendung von Wismut(III)-2-ethylhexanoat, Wismut(III)-octoat und/oder Wismut(III)-neodecanoat.

Diese Katalysatoren werden beim erfindungsgemäßen Verfahren in Mengen von 0,001 bis 2,0 Gew.-%, vorzugsweise von 0,01 bis 0,2 Gew.-%, bezogen auf die Gesamtmenge der verwendeten Ausgangsverbindungen eingesetzt.

Neben den erfindungswesentlichen, Wismut enthaltenden Katalysatoren können beim erfindungsgemäßen Verfahren gegebenenfalls noch weitere Katalysatoren mitverwendet werden, beispielsweise die üblichen aus der Polyurethanchemie bekannten Katalysatoren, wie z. B. tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octanoat, Zinn(II)-ethylcaproat, Dibutylzinn(IV)-dilaurat und Molybdänglykolat.

Falls überhaupt, werden diese zusätzlichen Katalysatoren in einer Menge bis zu 1,6 Gew.-%, vorzugsweise bis zu 0,16 Gew.-%, bezogen auf die Gesamtmenge der verwendeten Ausgangsverbindungen eingesetzt, mit der Maßgabe, dass die Gesamtmenge aller beim erfindungsgemäßen Verfahren eingesetzten Kalysatoren 0,001 bis 2,0 Gew.-%, vorzugsweise von 0,01 bis 0,2 Gew.-% beträgt, wobei der Anteil der erfindungswesentlichen Wismut enthaltenden Katalysatoren an dieser Gesamtmenge der Katalysatoren mindestens 20 Gew.-% beträgt.

Weitere Hilfs- und Zusatzmittel, die den Ausgangsverbindungen beim erfindungsgemäßen Verfahren gegebenenfalls zugesetzt werden können, sind beispielsweise die aus der Pulverlacktechnologie bekannten Verlaufsmittel, wie z. B. Polybutylacrylate oder solche auf Basis von Polysilikonen, Lichtschutzmittel, wie z. B. sterisch gehinderte Amine, UV-Absorber, wie z. B. Benztriazole oder Benzophenone sowie Farbstabilisatoren gegen die Gefahr der Überbrennvergilbung, wie z. B. gegebenenfalls inerte Substituenten aufweisende, Trialkyl-, Triaryl- und/oder Trisalkylphenylphosphite.

Zur Durchführung des erfindungsgemäßen Verfahrens werden die Uretdiongruppen aufweisenden Polyisocyanate A), gegebenenfalls unter Mitverwendung weiterer Diisocyanate und/oder Polyisocyanate B) mit den Polyolen C) und gegebenenfalls weiteren gegenüber Isocyanaten reaktiven monofunktionellen Verbindungen D) in Gegenwart eines Wismut enthaltenden Katalysators in einem diskontinuierlichen oder kontinuierlichen Prozeß, beispielsweise in speziellen Apparaturen, wie z. B. Intensivknetern oder statischen Mischern, in dem genannten Äquivalent-Verhältnis von Isocyanatgruppen zu gegenüber Isocyanaten reaktiven Gruppen von 1,8 : 1 bis 0,6 : 1, vorzugsweise 1,6 : 1 bis 0,8 : 1 bei einer Reaktionstemperatur von 40 bis 200 °C, besonders bevorzugt von 60 bis 180 °C, vorzugsweise bis zum Erreichen des theoretisch errechneten NCO-Gehaltes umgesetzt.

Die Umsetzung erfolgt vorzugsweise lösemittelfrei in der Schmelze, sie kann selbstverständlich aber auch in einem geeigneten, gegenüber Isocyanatgruppen inerten Lösemittel durchgeführt werden. Geeignete Lösemittel für diese weniger bevorzugte Vorgehensweise sind beispielsweise die an sich bekannten üblichen Lacklösemittel wie z. B. Ethylacetat, Butylacetat, Ethylenglykolmonomethyl- oder -ethyletheracetat, 1-Methoxypropyl-2-acetat, Aceton, 2-Butanon, 4-Methyl-2-pentanon, Cyclohexanon, Toluol, oder deren Gemische, aber auch Lösemittel wie Propylenglykoldiacetat, Diethylenglykoldimethylether, Diethylenglykolethyl- und -butyletheracetat, N-Methylpyrrolidon und N-Methylcaprolactam, oder Gemische solcher Lösemittel.

Diese gegebenenfalls mitverwendeten Lösemittel müssen nach erfolgter Umsetzung mit Hilfe geeigneter Methoden, beispielsweise durch Ausfällen und einfaches Absaugen, Sprühtrocknung oder Schmelzextrusion in einer Ausdampfschnecke, vom erfindungsgemäßen Verfahrensprodukt abgetrennt werden.

Unabhängig von der Art der Durchführung erhält man beim erfindungsgemäßen Verfahren in Abhängigkeit vom gewählten Äquivalentverhältnis von Isocyanatgruppen zu gegenüber Isocyanaten reaktiven Gruppen uretdiongruppenhaltige Polyadditionsverbindungen mit einem Gehalt an freien Isocyanatgruppen (berechnet als NCO; Molekulargewicht = 42) von 0 bis 6,0 Gew.-%, vorzugsweise von 0 bis 5,0 Gew.-%, besonders bevorzugt von 0 bis 4,0 Gew.-%, einem Gehalt an Uretdiongruppen (berechnet als C₂N₂O₂ Molekulargewicht = 84) von 3 bis 25 Gew.-%, vorzugsweise von 5 bis 17 Gew.-%, besonders bevorzugt von 6 bis 17 Gew.-%, und einem Gehalten an monomeren Diisocyanaten von weniger als 1,0 Gew.-%, vorzugsweise weniger als 0,5 Gew.-%, besonders bevorzugt weniger als 0,3 Gew.-%, die unterhalb 40 °C fest und oberhalb 125 °C flüssig sind und insbesondere einen nach der Differential-Thermoanalyse (DTA) bestimmten Schmelzpunkt bzw. Schmelzbereich aufweisen, der innerhalb eines Temperaturbereiches von 40 bis 110 °C, besonders bevorzugt innerhalb des Temperaturbereiches von 50 bis 100 °C liegt.

Die erfindungsgemäßen Polyadditionsverbindungen stellen wertvolle Ausgangsmaterialien zur Herstellung von Polyurethankunststoffen nach dem Isocyanat-Polyadditionsverfahren dar. Sie finden insbesondere Verwendung als Vernetzerkomponente in hitzehärtbaren blockierungsmittelfreien PUR-Pulverlacken, wobei in Abhängigkeit von den gewählten Reaktionspartnern hochglänzende bis tief-matte Beschichtungen erhalten werden, die die von Polyurethanpulverlacken bekannt guten chemischen und mechanischen Beständigkeiten aufweisen. Gegenüber den bisher verfügbaren analog aufgebauten Uretdionpulverlackvernetzern, die unkatalysiert oder beispielsweise unter DBTL-Katalyse hergestellt wurden, zeichnen sich die erfindungsgemäßen Verfahrensprodukte insbesondere in nach dem sogenannten "one-shot-Verfahren" erhältlichen Pulvermattlacken durch deutlich niedrigere Glanzgrade aus. Gleichzeitig wird der Glanz hochglänzender Formulierungen aber nicht negativ beeinflußt.

Zur Herstellung blockierungsmittelfreier Pulverlacke geeignete Reaktionspartner für die erfindungsgemäßen Polyadditionsverbindungen sind grundsätzlich sämtliche aus der Pulverlack-Technologie bekannten Bindemittel mit gegenüber Isocyanaten reaktionsfähigen Gruppen, wie z. B. Hydroxyl-, Carboxyl-, Amino-, Thiol-, Urethan- oder Harnstoffgruppen. Bevorzugt kommen jedoch hydroxyfunktionelle Pulverlackbindemittel zum Einsatz, die unterhalb 40°C fest und oberhalb 130°C flüssig sind. Die Erweichungstemperaturen dieser hydroxyfunktionellen Harze - bestimmt nach der Differential-Thermoanalyse (DTA) - liegen vorzugsweise innerhalb des Temperaturbereiches von 30 bis 120°C, besonders bevorzugt innerhalb des Temperaturbereiches von 35 bis 110°C.

Ihre Hydroxylzahlen liegen im allgemeinen zwischen 15 und 350, vorzugsweise zwischen 20 und 300 und ihr mittleres (aus der Funktionalität und dem Hydroxylgehalt errechenbares) Molekulargewicht im allgemeinen zwischen 500 und 12 000, vorzugsweise zwischen 700 und 7 000.

Derartige Pulverlackbindemittel sind beispielsweise hydroxylgruppenhaltige Polyester, Polyacrylate oder Polyurethane, wie sie in den obengenannten Veröffentlichungen des Standes der Technik, z. B. der EP-A 0 045 998, oder der EP-A 0 254 152 beschrieben sind, aber auch beliebige Mischungen solcher Harze.

Vorteilhafterweise werden die erfindungsgemäßen uretdiongruppenhaltigen Polyadditionsverbindungen in Kombination mit Bindemittelmischungen, bestehend aus mindestens einem Polyol einer OH-Zahl von 20 bis 40 mg KOH/g und mindestens einem Polyol einer OH-Zahl von 200 bis 300 mg KOH/g zur Herstellung von Pulverbeschichtungen mit matter Oberfläche eingesetzt.

Gegenstand der vorliegenden Erfindung ist daher auch die Verwendung uretdiongruppenhaltiger Polyadditionsprodukte erhältlich durch Umsetzung von
A) Uretdiongruppen aufweisenden Polyisocyanaten einer mittleren Isocyanatfunktionalität von mindestens 2,0, gegebenenfalls unter Mitverwendung von
B) weiteren von A verschiedenen Diisocyanaten und/oder Polyisocyanaten in einer Menge von bis zu 70 Gew.-%, bezogen auf das Gesamtgewicht der Komponenten A) und B), mit
C*) Polyolen des Molekulargewichtsbereiches von 62 - 2000 mit einer (mittleren) Funktionalität von mindestens 2,0 oder Gemischen von Polyolen und gegebenenfalls
D) weiteren gegenüber Isocyanatgruppen reaktiven, monofunktionellen Verbindungen in einer Menge von bis zu 40 Gew.-%, bezogen auf das Gesamtgewicht der Komponenten C*) und D),
unter Einhaltung eines Äquivalentverhältnisses von Isocyanatgruppen zu gegenüber Isocyanaten reaktiven Gruppen von 1,8:1 bis 0,6:1, **dadurch gekennzeichnet, dass** man die Umsetzung in Gegenwart mindestens eines Wismut enthaltenden Katalysators durchführt,
in Kombination mit mindestens einem Polyol einer OH-Zahl von 20 bis 40 mg KOH/g und mindestens einem Polyol einer OH-Zahl von 200 bis 300 mg KOH/g zur Herstellung von Pulverbeschichtungen mit matter Oberfläche.

Geeignete Polyole C*) sind beispielsweise einfache mehrwertige Alkohole des Molekulargewichtsbereiches 62 bis 400, wie z. B. 1,2-Ethandiol, 1,2- und 1,3-Propandiol, die isomeren Butandiole, Pentandiole, Hexandiole, Heptandiole und Octandiole, 1,10-Decandiol, 1,12-Dodecandiol, 1,2-und 1,4-Cyclohexandiol, 1,4-Cyclohexandimethanol oder 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat aber auch einfache Ester- oder Etheralkohole, wie z. B. Hydroxypivalinsäureneopentylglykolester, Diethylenglykol oder Dipropylenglykol.

Geeignete Ausgangsverbindungen C*) sind auch die an sich bekannten Polyhydroxylverbindungen vom Polyester-, Polycarbonat-, Polyestercarbonat- oder Polyethertyp.

Als Polyolkomponenten C*) geeignete Polyesterpolyole sind beispielsweise solche eines mittleren, aus Funktionalität und Hydroxylzahl berechenbaren Molekulargewichtes von 200 bis 2000, vorzugsweise von 250 bis 1500, mit einem Hydroxylgruppen-Gehalt von 1 bis 21 Gew.-%, vorzugsweise 2 bis 18 Gew.-%, wie sie sich in an sich bekannter Art und Weise durch Umsetzung von mehrwertigen Alkoholen, beispielsweise den obengenannten des Molekulargewichtsbereiches 62 bis 400, mit unterschüssigen Mengen an mehrwertigen Carbonsäuren, entsprechenden Carbonsäureanhydriden, entsprechenden Polycarbonsäureestern von niederen Alkoholen oder Lactonen herstellen lassen.

Die zur Herstellung der Polyesterpolyole verwendeten Säuren oder Säurederivate können aliphatischer, cycloaliphatischer und/oder aromatischer Natur sein und gegebenenfalls, z. B. durch Halogenatome, substituiert und/oder ungesättigt sein. Beispiele geeigneter Säuren sind beispielsweise mehrwertige Carbonsäuren des Molekulargewichtsbereichs 118 bis 300 oder deren Derivate wie beispielsweise Bernsteinsäure, Adipinsäure, Sebacinsäure, Phthalsäure, Isophthalsäure, Terephthalsäure, Trimellithsäure, Phthalsäureanhydrid, Tetrahydrophthalsäure, Hexahydrophthalsäure, Maleinsäure, Maleinsäureanhydrid, dimere und trimere Fettsäuren, Terephthalsäuredimethylester und Terephthalsäure-bis-glykolester.

Zur Herstellung der Polyesterpolyole können auch beliebige Gemische dieser beispielhaft genannten Ausgangsverbindungen eingesetzt werden.

Eine als Polyolkomponente C*) bevorzugt eingesetzte Art von Polyesterpolyolen sind solche, wie sie sich in an sich bekannter Weise aus Lactonen und einfachen mehrwertigen Alkoholen, wie z. B. den oben beispielhaft genannten, als Startermolekülen unter Ringöffnung herstellen lassen. Geeignete Lactone zur Herstellung dieser Polyesterpolyole sind beispielsweise β-Propiolacton, γ-Butyrolacton, γ- und δ-Valerolacton, ε-Caprolacton, 3,5,5- und 3,3,5-Trimethylcaprolacton oder beliebige Gemische solcher Lactone.

Als Polyole C*) geeignete Polyhydroxylverbindungen vom Polycarbonattyp stellen insbesondere die an sich bekannten Polycarbonatdiole dar, wie sie sich beispielsweise durch Umsetzung von zweiwertigen Alkoholen, beispielsweise solchen, wie sie oben in der Liste der mehrwertigen Alkohole des Molekulargewichtsbereichs 62 bis 400 beispielhaft genannt sind, mit Diarylcarbonaten, wie z. B. Diphenylcarbonat, mit Dialkylcarbonaten, wie z. B. Dimethylcarbonat, oder Phosgen herstellen lassen.

Als Polyole C*) geeignete Polyhydroxylverbindungen vom Polyestercarbonattyp sind insbesondere die an sich bekannten Estergruppen- und Carbonatgruppen aufweisende Diole, wie sie beispielsweise gemäß der Lehre der DE-A 1 770 245 oder WO 03/002630 durch Umsetzung zweiwertiger Alkohole mit Lactonen der oben beispielhaft genannten Art, insbesondere ε-Caprolacton und anschließende Reaktion der dabei entstehenden Polyesterdiole mit Diphenylcarbonat oder Dimethylcarbonat erhalten werden können.

Als Polyole C*) geeignete Polyetherpolyole sind insbesondere solche eines mittleren, aus Funktionalität und Hydroxylzahl berechenbaren Molekulargewichtes von 200 bis 2000, vorzugsweise 250 bis 1500, mit einem Hydroxylgruppen-Gehalt von 1,7 bis 25 Gew.-%, vorzugsweise 2,2 bis 20 Gew.-%, wie sie in an sich bekannter Weise durch Alkoxylierung geeigneter Startermoleküle zugänglich sind. Zur Herstellung dieser Polyetherpolyole können beliebige mehrwertige Alkohole, wie die oben beschriebenen des Molekulargewichtsbereichs 62 bis 400, als Startermoleküle eingesetzt werden. Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Geeignete Polyetherpolyole sind auch die an sich bekannten Polyoxytetramethylenglykole, wie sie beispielsweise gemäß Angew. Chem. 72, 927 (1960) durch Polymerisation von Tetrahydrofuran erhalten werden können.

Als Ausgangsverbindungen C*) ebenfalls geeignet sind Dimerdiole, wie sie in an sich bekannter Weise z. B. durch Hydrierung von dimeren Fettsäuren und/oder deren Estern gemäß der DE-A 1 768 313 oder anderen der in der EP-A 0 720 994 Seite 4, Zeile 33 bis Zeile 58 beschriebenen Verfahren hergestellt werden können.

Bevorzugte Ausgangsverbindungen C*) für das erfindungsgemäßen Verfahren sind die obengenannten einfachen mehrwertigen Alkohole des Molekulargewichtsbereiches 62 bis 400, die genannten Polyester- oder Polycarbonatpolyole sowie beliebige Gemische dieser Polyolkomponenten.

Besonders bevorzugt kommen jedoch die oben innerhalb der Liste der einfachen mehrwertigen Alkohole genannten Diole des Molekulargewichtsbereiches 62 bis 300, Polyesterdiole oder Polycarbonatdiole des Molekulargewichtsbereiches 134 bis 1200 oder deren Gemische zum Einsatz.

Ganz besonders bevorzugte Ausgangsverbindungen C*) für das erfindungsgemäße Verfahren sind Gemische der genannten Polyesterdiole mit bis zu 80 Gew.-%, vorzugsweise bis zu 60 Gew.-%, bezogen auf das Gesamtgewicht der eingesetzten Polyole C*) an einfachen Diolen des Molekulargewichtsbereiches 62 bis 300.

Zur Herstellung eines gebrauchsfertigen Pulverlacks werden die erfindungsgemäßen Polyadditionsverbindungen mit geeigneten hydroxyfunktionellen Pulverlackbindemitteln gemischt, gegebenenfalls mit weiteren Hilfs- und Zusatzmitteln, wie z. B. Katalysatoren, Pigmenten, Füllstoffen oder Verlaufsmitteln versetzt, und beispielsweise in Extrudern oder Knetern bei Temperaturen oberhalb des Schmelzbereichs der Einzelkomponenten, beispielsweise einer Temperatur von 70 bis 130°C, vorzugsweise von 70 bis 110°C, zu einem homogenen Material vereinigt.

Die erfindungsgemäßen Polyadditionsverbindungen und die hydroxyfunktionellen Bindemittel kommen hierbei in solchen Mengenverhältnissen zum Einsatz, dass auf jede Hydroxylgruppe 0,6 bis 2,0, vorzugsweise 0,6 bis 1,8, besonders bevorzugt 0,8 bis 1,6 Isocyanatgruppen entfallen, wobei unter Isocyanatgruppen bei den erfindungsgemäßen Polyadditionsverbindungen die Summe aus in dimerer Form als Uretdiongruppen vorliegenden Isocyanatgruppen und freien Isocyanatgruppen verstanden wird.

Bei den gegebenenfalls zur Beschleunigung der Aushärtung mitzuverwendenden Katalysatoren handelt es sich beispielsweise um die üblichen, aus der Polyurethanchemie bekannten Verbindungen, wie sie bereits oben als gegebenenfalls beim erfindungsgemäßen Verfahren zur Reaktionsbeschleunigung mitzuverwendende Katalysatoren beschrieben wurden, um Amidine der in der EP-A 0 803 524 genannten Art, Dialkylmetallcarboxylate, -alkoholate oder Metall-acetylacetonate der in der EP-B 1 137 689 genannten Art, Ammoniumcarboxylate der in der EP-A 1 475 399 genannten Art, Metallhydroxide oder -alkoholate der in der EP-A 1 475 400 genannten Art, Ammoniumhydroxide oder -fluoride der in der EP-A 1 522 548 genannten Art oder beliebige Gemische solcher Katalysatoren. Darüberhinaus können gegebenenfalls aber auch die oben genannten für das erfindungsgemäße Verfahren als Katalysatoren wesentlichen, Wismut enthaltenden Verbindungen als Aushärtekatalysatoren bei der Herstellung der Pulverlacke mitverwendet werden.

Diese Katalysatoren können gegebenenfalls in Mengen von 0,01 bis 5,0 Gew.-% vorzugsweise 0,05 bis 2,0 Gew.-%, bezogen auf die Gesamtmenge an organischem Bindemittel, d.h. erfindungsgemäßen Polyadditionsverbindungen in Kombination mit den hydroxyfunktionellen Pulverlackbindemitteln aber exklusive den gegebenenfalls verwendeten weiteren Hilfs- und Zusatzmitteln, zugesetzt werden.

Bei der ebenfalls erfindungsgemäßen Verwendung der nach dem erfmdungsgemäßen Verfahren erhältlichen uretdiongruppenhaltigen Polyadditionsverbindungen in Kombination mit Gemischen von Bindemitteln stark unterschiedlicher OH-Zahl zur Herstellung von Pulverbeschichtungen mit matter Oberfläche ist die Mitverwendung von Aushärtekatalysatoren allerdings weniger bevorzugt, da sich der Glanzgrad weder durch Zusatz Wismut enthaltender Katalysatoren noch anderer PUR-Katalysatoren, wie z. B. DBTL, weiter reduzieren läßt. Wie die Ausführungsbeispiele zeigen, ist eine Katalyse dieser matten Pulverlackformulierungen im Gegenteil sogar von Nachteil, da sich der Glanz mit steigender Katalysatorkonzentration deutlich erhöht.

Die extrudierte Masse wird nach Abkühlen auf Raumtemperatur und nach einer geeigneten Vorzerkleinerung, z.B. durch Zerhacken oder Schroten, zu einem Pulverlack gemahlen und durch Sieben von den Kornanteilen oberhalb der gewünschten Korngröße, beispielsweise oberhalb 0,1 mm, befreit.

Die so hergestellten Pulverlackformulierungen können nach üblichen Pulverauftragsverfahren, wie z.B. elektrostatischem Pulversprühen oder Wirbelsintern, auf die zu überziehenden Substrate aufgebracht werden. Die Härtung der Überzüge erfolgt durch Erhitzen auf Temperaturen von 100 bis 220°C, vorzugsweise jedoch bei für Polyurethanpulverlacke niedrigen Temperaturen von 110 bis 160°C, besonders bevorzugt bei Temperaturen von 120 bis 150 °C, beispielsweise während eines Zeitraums von ca. 5 bis 60 Minuten.

Man erhält harte und elastische Beschichtungen mit guter Lösemittel- und Chemikalienbeständigkeit, die sich durch einen hervorragenden Verlauf auszeichnen, wobei sich der Glanz durch Auswahl geeigneter Reaktionspartner von hochglänzend bis tiefmatt beliebig einstellen läßt.

Die nachfolgenden Beispiele dienen zur weiteren Erläuterung der Erfindung. Alle Prozentangaben beziehen sich auf das Gewicht.

### Beispiele

Im Folgenden beziehen sich alle Prozentangaben, mit Ausnahme der Glanzwerte, auf das Gewicht. Die angegebenen Uretdiongruppen-Gehalte wurden durch Heißtitration (30 minütiges Kochen am Rückfluss mit überschüssigem Di-n-butylamin in 1,2-Dichlorbenzol und anschließende Rücktitration mit Salzsäure) bestimmt.

### Herstellung von Ausgangsverbindungen A)

### Uretdiongruppen aufweisendes Polyisocyanat A1)

Gemäß Beispiel 3 der EP-B 0 896 973 hergestelltes Uretdionpolyisocyanat auf Basis von 1-Isocyanato-3,3,5-trimethyl-5-isocyanatomethyl-cyclohexan (IPDI) mit einem Gehalt an freien NCO-Gruppen von 17,0 %, einem durch Heißtitration bestimmten Gehalt an Uretdiongruppen von 20,5 % und einem Gehalt an monomerem IPDI von 0,4 %.

### Uretdiongruppen aufweisendes Polyisocyanat A2)

Gemäß Beispiel 6 der WO 2004/005364 hergestelltes Uretdionpolyisocyanat auf Basis von 4,4'-Diisocyanatodicyclohexylmethan mit einem Gehalt an freien NCO-Gruppen von 14,2 %, einem durch Heißtitration bestimmten Gehalt an Uretdiongruppen von 17,8 % und einem Gehalt an monomerem 4,4'-Diisocyanatodicyclohexylmethan von 0,5 %.

### Herstellung von Ausgangsverbindungen C)

### Estergruppen aufweisendes Diol C1)

901 g 1,4-Butandiol und 1712 g ε-Caprolacton werden bei Raumtemperatur unter trockenem Stickstoff vermischt, mit 0,3 g Zinn(II)-octoat versetzt und anschließend für 5 h auf 160 °C erhitzt. Nach Abkühlen auf Raumtemperatur erhält man ein farbloses flüssiges Produkt mit folgenden Kenndaten:

| | |
|---|---|
| η (23 °C): | 180 mPas |
| OH-Zahl: | 416 mg KOH/g |
| freies ε-Caprolacton: | 0,1% |
| mittleres Molekulargewicht (aus OH-Zahl ber.): | 269 |

### Estergruppen aufweisendes Diol C 2)

761 g 1,3-Propandiol und 1712 g ε-Caprolacton werden bei Raumtemperatur unter trockenem Stickstoff vermischt, mit 0,3 g Zinn(II)-octoat versetzt und anschließend für 5 h auf 160 °C erhitzt. Nach Abkühlen auf Raumtemperatur erhält man ein farbloses flüssiges Produkt mit folgenden Kenndaten:

| | |
|---|---|
| η (23 °C): | 190 mPas |
| OH-Zahl: | 449 mg KOH/g |
| freies ε-Caprolacton: | 0,3 % |
| mittleres Molekulargewicht (aus OH-Zahl ber.): | 249 |

### Beispiel 1 (erfindungsgemäß, diskontinuierliche Herstellung)

988 g (4,0 val) des Uretdiongruppen aufweisenden IPDI-Polyisocyanates A1) wurden unter trockenem Stickstoff mit 1,5 g Wismut(III)-octoat als Katalysator versetzt und auf 80 °C erwärmt. Anschließend gab man innerhalb von 10 min eine Mischung von 430 g (3,2 val) des Estergruppen aufweisenden Diols C1), 18 g (0,4 val) 1,4-Butandiol und 52 g (0,4 val) 2-Ethyl-1-hexanol zu, wobei die Temperatur aufgrund der freiwerdenden Reaktionswärme bis auf 130°C anstieg. Nach einer Nachrührzeit von 10 Minuten war der NCO-Gehalt des Reaktionsgemisches auf einen Wert von 0,7 % abgesunken. Die Schmelze wurde zum Erkalten auf ein Blech gegossen, und man erhielt eine erfindungsgemäße uretdiongruppenhaltige Polyadditionsverbindung in Form eines farblosen Festharzes.
Das Produkt wies folgende Kenndaten auf:

| | |
|---|---|
| Uretdiongruppen-Gehalt (ber.): | 13,6 % |
| monomeres IPDI: | <0,1% |
| NCO-Gehalt: | 0,7 % |
| Schmelzbereich: | 80 - 84°C |

### Beispiel 2 (erfindungsgemäß, kontinuierliche Herstellung)

### Verwendete Apparatur:

Statischer Mischer mit Doppelmantelbeheizung bestehend aus einer Mischzone sowie einer Reaktionszone mit einem Gesamtvolumen von 180 ml. Als Mischelement diente in der Mischzone ein SMX 6-Mischer der Fa. Sulzer (Winterthur, Schweiz) mit einem Durchmesser von 6 mm und einer Länge von 60,5 mm, in der Reaktionszone ein SMXL 20-Mischer der Fa. Sulzer mit einem Durchmesser von 20 mm und einer Länge von 520 mm.

Die Dosierung der Edukte erfolgte mit Hilfe einer speziell für die Beschickung von statischen Mischern ausgerüsteten zweiköpfigen Kolbendosierpumpe EK2 der Fa. Lewa (Leonberg), bei der beide Pumpenköpfe gleichzeitig ausstoßen.

Aus einem Vorlagekolben A wurden der Mischzone des statischen Mischers pro Stunde 1480 g (6,0 val) des unter trockenem Stickstoff auf eine Temperatur von 80 °C erwärmten Uretdiongruppen aufweisenden IPDI-Polyisocyanates A1) kontinuierlich zudosiert. Die Rohrleitungen zwischen Vorlage A und der Pumpe bzw. Pumpe und statischem Mischer sowie der betreffende Pumpenkopf wurden auf eine Temperatur von ca. 100 °C geheizt.

Gleichzeitig wurden der Mischzone aus einer weiteren Vorlage B pro Stunde 750 g (6,0 val) einer Mischung aus 85,7 Gew.-% des Estergruppen aufweisenden Diols C1), 3,6 Gew.-% 1,4-Butandiol, 10,4 Gew.-% 2-Ethyl-1-hexanol und 0,3 Gew.-% Wismut(III)-octoat als Katalysator zugeführt. Eine Beheizung von Vorlage, Rohrleitungen und Pumpenkopf war hier aufgrund der niedrigen Viskosität der Polyolmischung nicht erforderlich.

Der statische Mischer wurde über die gesamte Länge auf eine Manteltemperatur von ca. 110 °C beheizt. Die mittlere Verweilzeit der Reaktionsschmelze betrug 5 min. Das Produkt, das den statischen Mischer am Ende der Reaktionszone mit einer Temperatur von ca. 140 °C verließ, wurde zum Erkalten auf Bleche geleitet. Man erhielt einen farblosen Feststoff mit folgenden Kenndaten:

| | |
|---|---|
| Uretdiongruppen-Gehalt (ber.): | 13,6 % |
| monomeres IPDI: | <0,1 % |
| NCO-Gehalt: | 0,6 % |
| Schmelzbereich: | 82 - 85°C |

### Beispiel 3 (erfindungsgemäß, diskontinuierliche Herstellung)

1000 g (4,0 val) des Uretdiongruppen aufweisenden IPDI-Polyisocyanates A1) wurden unter trockenem Stickstoff mit 1,3 g Wismut(III)-octoat als Katalysator versetzt und auf 80 °C erwärmt. Anschließend gab man innerhalb von 10 min eine Mischung von 300 g (2,4 val) des Estergruppen aufweisenden Diols C2) und 30 g (0,8 val) 1,3-Propandiol zu, wobei die Temperatur aufgrund der freiwerdenden Reaktionswärme bis auf 130°C anstieg. Nach einer Nachrührzeit von 10 Minuten war der NCO-Gehalt des Reaktionsgemisches auf einen Wert von 2,7 % abgesunken. Die Schmelze wurde zum Erkalten auf ein Blech gegossen, und man erhielt eine erfindungsgemäße uretdiongruppenhaltige Polyadditionsverbindung in Form eines farblosen Festharzes. Das Produkt wies folgende Kenndaten auf:

| | |
|---|---|
| Uretdiongruppen-Gehalt (ber.): | 15,4% |
| NCO-Gehalt (gef. / ber.): | 2,7/2,5% |
| Gesamt-NCO-Gehalt (ber.): | 17,9% |
| monomeres IPDI: | 0,3 % |
| Schmelzbereich: | 91- 97 °C |

### Beispiel 4 (erfindungsgemäß, kontinuierliche Herstellung)

Nach dem in Beispiel 2 beschriebenen Verfahren und in der dort beschriebenen Apparatur wurde eine uretdiongruppenhaltige Polyadditionsverbindung hergestellt. Dazu wurden der Mischzone aus Vorlage A pro Stunde 1480 g (6,0 val) des auf 80 °C vorgeheizten IPDI-Uretdions A1) und gleichzeitig aus Vorlage B 496 g (4,8 val) eines katalysierten Polyolgemisches, bestehend aus 90,4 Gew.-% des Polyesterdiols C2), 9,2 Gew.-% 1,3-Propandiol und 0,4 Gew.-% Wismut(III)-octoat zudosiert.

Der statische Mischer wurde wie in Beispiel 2 beheizt, die mittlere Verweilzeit der Reaktionsschmelze betrug ca. 5 min. Man erhielt einen praktisch farblosen Feststoff mit folgenden Kenndaten:

| | |
|---|---|
| Uretdiongruppen-Gehalt (ber.): | 15,4% |
| NCO-Gehalt (gef. / ber.): | 2,6/2,5% |
| Gesamt-NCO-Gehalt (ber.): | 17,9% |
| monomeres IPDI: | 0,2 % |
| Schmelzbereich: | 92 - 97 °C |

### Beispiel 5 (erfindungsgemäß, kontinuierliche Herstellung)

Nach dem in Beispiel 2 beschriebenen Verfahren und in der dort beschriebenen Apparatur wurde eine uretdiongruppenhaltige Polyadditionsverbindung hergestellt. Dazu wurden der Mischzone aus Vorlage A pro Stunde 1480 g (5,0 val) des auf 80 °C vorgeheizten 4,4'-Diiso-cyanatodicyclohexylmethan-Uretdions A2) und gleichzeitig aus Vorlage B 495 g (4,0 val) eines katalysierten Polyolgemisches, bestehend aus 95,0 Gew.-% des Polyesterdiols C1), 4,6 Gew.-% 1,4-Butandiol und 0,4 Gew.-% Wismut(III)-octoat zudosiert.

Der statische Mischer wurde wie in Beispiel 2 beheizt, die mittlere Verweilzeit der Reaktionsschmelze betrug ca. 5 min. Man erhielt einen praktisch farblosen Feststoff mit folgenden Kenndaten:

| | |
|---|---|
| Uretdiongruppen-Gehalt (ber.): | 13,3% |
| NCO-Gehalt (gef. / ber.): | 2,1/2,1% |
| Gesamt-NCO-Gehalt (ber.): | 15,4 % |
| monomeres 4,4'-Diisocyanatodicyclohexylmethan: | 0,2 % |
| Schmelzbereich: | 95 -104 °C |

### Beispiel 6 (erfindungsgemäß, diskontinuierliche Herstellung)

Nach dem in Beispiel 1 beschriebenen Verfahren wurden 988 g (4,0 val) des Uretdiongruppen aufweisenden IPDI-Polyisocyanates A1) mit 430 g (3,2 val) des Estergruppen aufweisenden Diols C1), 18 g (0,4 val) 1,4-Butandiol und 52 g (0,4 val) 2-Ethyl-1-hexanol in Gegenwart von 1,5 g Wismut(III)-chlorid als Katalysator umgesetzt. Man erhielt eine erfindungsgemäße uretdiongruppenhaltige Polyadditionsverbindung in Form eines farblosen Festharzes mit den folgenden Kenndaten:

| | |
|---|---|
| Uretdiongruppen-Gehalt (ber.): | 13,6 % |
| monomeres IPDI: | <0,1 % |
| NCO-Gehalt: | 0,8 % |
| Schmelzbereich: | 79 - 85 °C |

### Beispiel 7 (erfindungsgemäß, diskontinuierliche Herstellung)

Nach dem in Beispiel 1 beschriebenen Verfahren wurden 988 g (4,0 val) des Uretdiongruppen aufweisenden IPDI-Polyisocyanates A1) mit 430 g (3,2 val) des Estergruppen aufweisenden Diols C1), 18 g (0,4 val) 1,4-Butandiol und 52 g (0,4 val) 2-Ethyl-1-hexanol in Gegenwart von 1,5 g Wismut(III)-neodecanoat als Katalysator umgesetzt. Man erhielt eine erfindungsgemäße uretdiongruppenhaltige Polyadditionsverbindung in Form eines farblosen Festharzes mit den folgenden Kenndaten:

| | |
|---|---|
| Uretdiongruppen-Gehalt (ber.): | 13,6 % |
| monomeres IPDI: | <0,1 % |
| NCO-Gehalt: | 0,7 % |
| Schmelzbereich: | 79- 83°C |

### Beispiel 8 (Vergleich, unkatalysiert, diskontinuierliche Herstellung)

988 g (4,0 val) des Uretdiongruppen aufweisenden IPDI-Polyisocyanates A1) wurden unter trockenem Stickstoff auf 80 °C erwärmt. Anschließend gab man innerhalb von 30 min eine Mischung von 430 g (3,2 val) des Estergruppen aufweisenden Diols C1), 18 g (0,4 val) 1,4-Butandiol und 52 g (0,4 val) 2-Ethyl-1-hexanol zu und rührte bei einer Reaktionstemperatur von max. 105°C bis der NCO-Gehalt des Reaktionsgemisches nach 7 h auf einen Wert von 0,9 % abgesunken war. Die Schmelze wurde zum Erkalten auf ein Blech gegossen, und man erhielt eine uretdiongruppenhaltige Polyadditionsverbindung als praktisch farbloses Festharz mit den folgenden Kenndaten

| | |
|---|---|
| Uretdiongruppen-Gehalt (ber.): | 13,6 % |
| monomeres IPDI: | 0,2 % |
| NCO-Gehalt: | 0,9 % |
| Schmelzbereich: | 83- 85°C |

### Beispiel 9 (Vergleich, DBTL-Katalyse, diskontinuierliche Herstellung)

Nach dem in Beispiel 1 beschriebenen Verfahren wurden 988 g (4,0 val) des Uretdiongruppen aufweisenden IPDI-Polyisocyanates A1) mit 430 g (3,2 val) des Estergruppen aufweisenden Diols C1), 18 g (0,4 val) 1,4-Butandiol und 52 g (0,4 val) 2-Ethyl-1-hexanol in Gegenwart von 1,5 g Dibutylzinn(IV)-laurat (DBTL) als Katalysator umgesetzt. Man erhielt eine uretdiongruppenhaltige Polyadditionsverbindung in Form eines farblosen Festharzes mit den folgenden Kenndaten:

| | |
|---|---|
| Uretdiongruppen-Gehalt (ber.): | 13,6 % |
| monomeres IPDI: | <0,1 % |
| NCO-Gehalt: | 0,8 % |
| Schmelzbereich: | 81 - 86°C |

### Beispiel 10 (Verwendung in "one-shot"-Pulvermattlacken; erfindungsgemäß [a] und Vergleich [b])

[a] 49,4 Gew.-Teile eines handelsüblichen hydroxylgruppenhaltigen Polyesters einer OH-Zahl von 38 (Rucote^{®} XP 2566, Bayer MaterialScience AG, Leverkusen) und 16,4 Gew.-Teile eines handelsüblichen hydroxylgruppenhaltigen Polyesters einer OH-Zahl von 265 (Rucote^{®} 109, Bayer MaterialScience AG, Leverkusen) wurden mit 27,5 Gew.-Teilen der erfindungsgemäßen Polyadditionsverbindung aus Beispiel 1, entsprechend einem Äquivalentverhältnis von Gesamt-NCO zu OH von 0,8:1, 1,5 Gew.-Teilen eines handelsüblichen Verlaufsmittels (Resiflow^{®} PV 88, Worlée-Chemie GmbH, Hamburg), 0,5 Gew.-Teilen Benzoin und 5,0 Gew.-Teilen eines schwarzen Eisenoxidpigmentes (Bayferrox^{®} 303 T, Lanxess AG, Leverkusen) gründlich gemischt und anschließend mit Hilfe eines Buss Cokneters vom Typ PLK 46 bei 100 U/min und einer Gehäusetemperatur von 100 bis 120°C im Verfahrensteil homogenisiert. Nach Abkühlen wurde die erstarrte Schmelze mit Hilfe einer Sichtermühle (ACM 2, Hosokawa Mikropul) mit einem 90 µm Sieb gemahlen und gesiebt.
[b] Zum Vergleich wurde analog aus 49,4 Gew.-Teilen Rucote^{®} XP 2566 und 16,4 Gew.-Teilen Rucote^{®} 109 mit 27,5 Gew.-Teilen der gemäß Vergleichsbeispiel 9 erhaltenen Polyadditionsverbindung, 1,5 Gew.-Teilen des Verlaufsmittels Resiflow^{®} PV 88, 0,5 Gew.-Teilen Benzoin und 5,0 Gew.-Teilen des schwarzen Eisenoxidpigmentes Bayferrox^{®} 303 T ein Pulverlack hergestellt. Das Äquivalentverhältnis von Gesamt-NCO zu OH lag ebenfalls bei 0,8:1.

Die beiden so erhaltenen Pulverlacke wurden mit einer ESB-Becherpistole bei einer Hochspannung von 70 KV jeweils in zwei unterschiedlichen Schichtdicken auf entfettete Stahlbleche gespritzt und anschließend jeweils 10 min bei einer Temperatur von 200°C zu glatt verlaufenden, schwarz matten Beschichtungen ausgehärtet. Es wurden folgende lacktechnischen Eigenschaften gefunden:

Pulverlack vernetzt mit Polyadditionsverbindung aus

| | | Beispiel 1 (erfindungsgemäß [a]) | | Beispiel 9 (Vergleich [b]) | |
|---|---|---|---|---|---|
| Schichtdicke [µm] | | 50 - 60 | 100 - 120 | 50 - 60 | 100 - 120 |
| Erichsentiefung nach DIN 53156 | | 9,0 | 9,0 | 9,0 | 9,0 |
| Acetontest ^{a)} | DH | 50 | 50 | 50 | 50 |
| | Urteil | 0 - 1 | 0 - 1 | 0 - 1 | 0 - 1 |
| Glanz 60° (DIN 67530) | | 9 | 14 | 12 | 27 |

| | | | | | |
|---|---|---|---|---|---|
| ^{a)} DH: Anzahl der Doppelhübe mit getränktem Wattebausch Urteil: 0 = Film intakt 1 = Filmoberfläche angeweicht 2 = Film bis zum Untergrund angequollen 3 = Film aufgelöst m = matt (Glanzverlust) | | | | | |

Der Vergleich zeigt, dass sich mit beiden Vernetzern vollvernetzte elastische und lösemittelbeständige Lackfilme erhalten lassen, die mit der erfindungsgemäßen, unter Wismut-Katalyse hergestellten Polyadditionsverbindung vernetzten Beschichtungen aber einen deutlich niedrigeren Glanz zeigen.

### Beispiel 11 bis 14 (Verwendung in "one-shot"-Pulvermattlacken; erfindungsgemäß)

Nach dem in Beispiel 10 beschriebenen Verfahren wurden ausgehend von den in Beispiel 10 beschriebenen hydroxylgruppenhaltigen Polyestern Rucote^{®} XP 2566 (OH-Zahl 38) und Rucote^{®} 109 (OH-Zahl 265) sowie den erfindungsgemäßen Polyadditionsverbindungen aus Beispiel 3, 5, 6 und 7 schwarz pigmentierte Pulvermattlacke hergestellt. Das Äquivalentverhältnis von Gesamt-NCO zu OH betrug dabei in allen Fällen 0,8 : 1. Die fertig formulierten Pulverlacke wurden mit einer ESB-Becherpistole bei einer Hochspannung von 70 KV jeweils in zwei unterschiedlichen Schichtdicken auf entfettete Stahlbleche gespritzt und anschließend jeweils 10 min bei einer Temperatur von 200°C zu glatten, schwarz matten Beschichtungen ausgehärtet. Die nachfolgende Tabelle zeigt die Zusammensetzungen (Gew.-Teile) der Pulverlacke sowie die lacktechnischen Daten der daraus erhaltenen Beschichtungen.

| Beispiel | | 11 | | 12 | | 13 | | 14 | |
|---|---|---|---|---|---|---|---|---|---|
| Rucote^{®} XP 2566 | | 53,2 | | 51,2 | | 49,4 | | 49,4 | |
| Rucote^{®} 109 | | 17,6 | | 17,0 | | 16,4 | | 16,4 | |
| Polyadditionsverbindung aus | Beispiel 3 | 22,5 | | - | | - | | - | |
| | Beispiel 5 | - | | 25,1 | | - | | - | |
| | Beispiel 6 | - | | - | | 27,5 | | - | |
| | Beispiel 7 | | | | | - | | 27,5 | |
| Resiflow^{®} PV 88 | | 1,2 | | 1,2 | | 1,2 | | 1,2 | |
| Benzoin | | 0,5 | | 0,5 | | 0,5 | | 0,5 | |
| Bayferrox^{®} 303 T | | 5,0 | | 5,0 | | 5,0 | | 5,0 | |
| Schichtdicke [µm] | | 60 | 120 | 60 | 120 | 60 | 120 | 60 | 120 |
| Erichsentiefung nach DIN 53156 | [mm] | > 9 | > 9 | > 9 | >9 | >9 9 | > 9 | >9 9 | >9 9 |
| Acetontest ^{a)} | DH | 50 | 50 | 50 | 50 | 50 | 50 | 50 | 50 |
| | Urteil | 0 | 0 | 0 | 0 | 0 - 1 | 0 - 1 | 0 - 1 | 0 - 1 |
| Glanz 60° (DIN 67530) | | 6 | 9 | 8 | 13 | 9 | 15 | 9 | 14 |

| | | | | | | | | | |
|---|---|---|---|---|---|---|---|---|---|
| ^{a)} Bewertung siehe Beispiel 10) | | | | | | | | | |

### Beispiel 15 bis 17 ("one-shot"-Pulvermattlacke; Vergleich)

Nach dem in Beispiel 10 beschriebenen Verfahren wurden ausgehend von den in Beispiel 10 beschriebenen hydroxylgruppenhaltigen Polyestern Rucote^{®} XP 2566 (OH-Zahl 38) und Rucote^{®} 109 (OH-Zahl 265) sowie der unkatalysierten Polyadditionsverbindungen aus Vergleichsbeispiel 8 schwarz pigmentierte Pulvermattlacke hergestellt. Das Äquivalentverhältnis von Gesamt-NCO zu OH betrug dabei Fällen 0,8 : 1. Einer der Lacke wurde ohne weiteren Katalysatorzusatz extrudiert (Beispiel 15), während zwei weiteren Lacken vor der Extrusion 500 bzw. 1000 ppm Mengen an Wismut(III)-octoat als Katalysator zugesetzt wurden (Beispiel 16 bzw. 17). Die fertig formulierten Pulverlacke wurden wie in den vorherigen Beispielen beschrieben, auf Stahlbleche appliziert und ausgehärtet. Die nachfolgende Tabelle zeigt die Zusammensetzungen (Gew.-Teile) der Pulverlacke sowie die lacktechnischen Daten der daraus erhaltenen Beschichtungen.

| Beispiel (Vergleich) | | 15 | | 16 | | 17 | |
|---|---|---|---|---|---|---|---|
| Rucote^{®} XP 2566 | | 49,4 | | 49,4 | | 49,4 | |
| Rucote^{®} 109 | | 16,4 | | 16,4 | | 16,4 | |
| Polyadditionsverbindung aus | Beispiel 8 | 27,5 | | 27,5 | | 27,5 | |
| Wismut(III)-octoat | | - | | 500 ppm | | 1000 ppm | |
| Resiflow^{®} PV 88 | | 1,2 | | 1,2 | | 1,2 | |
| Benzoin | | 0,5 | | 0,5 | | 0,5 | |
| Bayferrox^{®} 303 T | | 5,0 | | 5,0 | | 5,0 | |
| Schichtdicke [µm] | | 60 | 120 | 60 | 120 | 60 | 120 |
| Erichsentiefung nach DIN 53156 [mm] | | > 9 | > 9 | > 9 | > 9 | > 9 | > 9 |
| Acetontest ^{a)} | DH | 50 | 50 | 50 | 50 | 50 | 50 |
| | Urteil | 0 - 1 | 0 - 1 | 0 - 1 | 0 - 1 | 0 - 1 | 0 - 1 |
| Glanz 60° (DIN 67530) | | 11 | 26 | 26 | 52 | 49 | 65 |

| | | | | | | | |
|---|---|---|---|---|---|---|---|
| ^{a)} Bewertung siehe Beispiel 10) | | | | | | | |

Der Vergleich von Beispiel 15 mit dem erfindungsgemäßen Beispiel 10 [a] zeigt, dass in "one-shot"-Pulvermattrezepturen unter Verwendung einer unkatalysiert hergestellten uretdiongruppenhaltigen Polyadditionsverbindung Beschichtungen mit höherem Glanz erhalten werden als bei Verwendung einer erfindungsgemäß unter Wismut-Katalyse hergestellten Polyadditionsverbindung gleicher Bruttozusammensetzung. Die Vergleichsbeispiele 16 und 17 belegen, dass sich der Glanz durch nachträglichen Zusatz von Wismut-Katalysatoren bei der Pulverlackherstellung nicht erniedrigen läßt sondern sich im Gegenteil sogar deutlich erhöht.

### Beispiel 18 (Verwendung in Hochglanz-Pulverlacken; erfindungsgemäß [a] und Vergleich [b])

[a] 50,7 Gew.-Teile eines handelsüblichen hydroxylgruppenhaltigen Polyesters einer OH-Zahl von 45 (Rucote^{®} 194, Bayer MaterialScience AG, Leverkusen) wurden mit 12,6 Gew.-Teilen der erfindungsgemäßen Polyadditionsverbindung aus Beispiel 1, entsprechend einem Äquivalentverhältnis von Gesamt-NCO zu OH von 1:1, 1,2 Gew.-Teilen eines handelsüblichen Verlaufsmittels (Resiflow^{®} PV 88, Worlee-Chemie GmbH, Hamburg), 0,5 Gew.-Teilen Benzoin und 35,0 Gew.-Teilen eines Weißpigmentes (Kronos^{®} 2160, Kronos Titan GmbH, Leverkusen) gründlich gemischt und anschließend mit Hilfe eines Buss Cokneters vom Typ PLK 46 bei 100 U/min und einer Gehäusetemperatur von 100 bis 120°C im Verfahrensteil homogenisiert. Nach Abkühlen wurde die erstarrte Schmelze mit Hilfe einer Sichtermühle (ACM 2, Hosokawa Mikropul) mit einem 90 µm Sieb gemahlen und gesiebt.
[b] Zum Vergleich wurde analog aus 50,7 Gew.-Teilen Rucote^{®} 194, 12,6 Gew.-Teilen der gemäß Vergleichsbeispiel 9 erhaltenen Polyadditionsverbindung, 1,2 Gew.-Teilen des Verlaufsmittels Resiflow^{®} PV 88, 0,5 Gew.-Teilen Benzoin und 35,0 Gew.-Teilen des Weißpigmentes Kronos 2160 ein Pulverlack hergestellt. Das Äquivalentverhältnis von Gesamt-NCO zu OH lag ebenfalls bei 1:1.

Die beiden so erhaltenen Pulverlacke wurden mit einer ESB-Becherpistole bei einer Hochspannung von 70 KV auf entfettete Stahlbleche gespritzt und anschließend jeweils 18 min bei einer Temperatur von 180°C zu glatt verlaufenden, hochglänzenden Beschichtungen ausgehärtet. Es wurden folgende lacktechnischen Eigenschaften gefunden:

Pulverlack vernetzt mit Polyadditionsverbindung aus

| | | Beispiel 1 (erfindungsgemäß [a]) | Beispiel 9 (Vergleich [b]) |
|---|---|---|---|
| Schichtdicke [µm] | | 50 - 60 | 50 - 60 |
| Erichsentiefung nach DIN 53156 | | > 9 | > 9 |
| Acetontest ^{a)} | DH | 50 | 50 |
| | Urteil | 0 - 1 | 0 - 1 |
| Glanz 60° (DIN 67530) | | 92 | 92 |

| | | | |
|---|---|---|---|
| ^{a)} Bewertung siehe Beispiel 10) | | | |

Die erfindungsgemäß unter Wismut-Katalyse hergestellte Polyadditionsverbindung zeigt in der glänzenden Pulverlack-Formulierung keinerlei Nachteile gegenüber einer DBTL-katalysiert hergestellten Polyadditionsverbindung gleicher Bruttozusammensetzung.

## Patentansprüche

1. Verfahren zur Herstellung uretdiongruppenhaltiger polyadditionsprodukte durch Umsetzung von
A) Uretdiongruppen aufweisenden Polyisocyanaten einer mittleren Isocyanatfunktionalität von mindestens 2,0, gegebenenfalls unter Mitverwendung von
B) weiteren von A verschiedenen Diisocyanaten und/oder Polyisocyanaten in einer Menge von bis zu 70 Gew.-%, bezogen auf das Gesamtgewicht der Komponenten A) und B), mit
C) Gemischen von Polyolen, wobei is sich um und gegebenenfalls
D) weiteren gegenüber Isocyanatgruppen reaktiven, monofunktionellen Verbindungen in einer Menge von bis zu 40 Gew.-%, bezogen auf das Gesamtgewicht der Komponenten C) und D),
unter Einhaltung eines Äquivalentverhältnisses von Isocyanatgruppen zu gegenüber Isocyanaten reaktiven Gruppen von 1,8:1 bis 0,6:1, wobei man die Umsetzung in Gegenwart mindestens eines Wismut enthaltenden Katalysators durchführt,
Gemische von Polyesterdiolen des Molekulargewichtsbereiches 134 bis 1200 mit bis zu 80 Gew.-%, bezogen auf das Gesamtgewicht der eingesetzten Polyole C), an einfachen Diolen des Molekulargewichtsbereiches 62 bis 300 handelt.

2. Verfahren gemäß Anspruch 1, **dadurch gekennzeichnet, dass** man als Uretdiongruppen aufweisende Polyisocyanate A) solche auf Basis von Diisocyanaten mit aliphatisch und/oder cycloaliphatisch gebundenen Isocyanatgruppen oder Gemische solcher Polyisocyanate verwendet

3. Verfahren gamä8 Anspruch 1, **dadurch gekennzeichnet, dass** man als Uretdionguppen aufweisende Polyisocyanate A) solche auf Basis von 1,6-Diisocyanatohoxan, 1-Isocyanato-3,3,5-trimethyl-5-isocyanatomethylcyclohexan 2,4'-Diisocyanatodicyctohexylmethan und/- oder 4,4'-Diisocyanatodieyclohexylmethan oder Gemische solcher Polyisocyanate verwendet.

4. Verfahren gemäß Anspruch 1, **dadurch gekennzeichnet, dass** die Umsetzung lösemittelfrei erfolgt.

5. Verfahren gemäß Anspruch 1, **dadurch gekennzeichnet, dass** Wismut(III)-carboxylate als Katalysatoren zum Einsatz kommen.

6. Verfahren gemäß Anspruch 1, **dadurch gekennzeichnet, dass** Wismut(III)-octoat und/oder Wismut(III)-neodecanoat als Katalysatoren zum Einsatz kommen.

7. Verfahren gemäß Anspruch 1, **dadurch gekennzeichnet, dass** die Wismut enthaltenden Katalysatoren in einer Menge von 0,001 bis 2,0 Gew.-%, bezogen auf die Gesamtmenge der verwendeten Ausgangsverbindungen A) bis D) eingesetzt werden.

8. Nach dem Verfahren gemäß Anspruch 1 erhältliche Uretdiongruppenhaltige Polyadditionsprodukte.

9. Verwendung uretdiongruppenhaltiger Polyadditionsprodukte gemäß Anspruch 8 als Ausgangskomponenten bei der Herstellung von Polyurethankunststoffen.

10. Verwendung uretdiongruppenhaltiger Polyadditionsprodukte gemäß Anspruch 8 als Vernetzerkomponenten für Polyurethaneinbrennlacke.

11. Verwendung uretdiongruppenhaltiger Polyadditionsprodukte gemäß Anspruch 8 als Vernetzerkomponenten für hitzehärtbare Polyurothanpulverlacke.

12. Verwendung uretdiongruppenhaltiger Polyadditionsprodukte erhältlich durch Umsetzung von
A) Uretdiongruppen aufweisenden Polyisocyanaten einer mittleren Isocyanatfunktionalität von mindestens 2,0, gegebenenfalls unter Mitverwendung von
B) weiteren von A verschiedenen Diisocyanaten und/oder Polyisocyanaten in einer Menge von bis zu 70 Gew.-%, bezogen auf das Gesamtgewicht der Komponenten A) und B), mit
C*) Polyolen des Molekulargewichtsbereiches von 62 - 2000 mit einer (mittleren) Funwonalität von mindestens 2,0 oder Gemischen von Polyolen und gegebenenfalls
D) weiteren gegenüber Isocyanatgruppen reaktiven, monofunktionellen Verbindungen in einer Menge von bis zu 40 Gew.-%, bezogen auf das Gesamtgewicht der Komponenten C*) und D),
unter Ehihaltung eines Äquivalentvorhältnisses von Isocyanatgruppen zu gegenüber Isocyanaten reaktiven Gruppen von 1,8:1 bis 0,6:1, wobei man die Umsetzung in Gegenwart mindestens eines Wismut enthaltenden Katalysators durchführt,
in Kombination mit mindestens einem Polyol einer OH-Zahl von 20 bis 40 mg KOH/g und mindestens einem Polyol einer OH-Zahl von 200 bis 300 mg KOH/g zur Herstellung von Pulverbeschichtungen mit matter Oberfläche.

## Claims

1. Process for the preparation of polyaddition products containing uretdione groups by reaction of
A) polyisocyanates containing uretdione groups and having a mean isocyanate functionality of at least 2.0, optionally with concomitant use of
B) other diisocyanates and/or polyisocyanates, different from A, in an amount of up to 70% by weight, based on the total weight of components A) and B), with
C) mixtures of polyols, these being mixtures of polyester diols of the molecular weight range 134 to 1200 with up to 80% by weight, based on the total weight of the polyols C) employed, of simple diols of the molecular weight range 62 to 300, and optionally
D) other, monofunctional compounds that are reactive towards isocyanate groups, in an amount of up to 40% by weight, based on the total weight of components C) and D),
while maintaining an equivalent ratio of isocyanate groups to isocyanate-reactive groups of 1.8:1 to 0.6:1, the reaction being carried out in the presence of at least one bismuth-containing catalyst.

2. Process according to Claim 1, **characterized in that** polyisocyanates A) containing uretdione groups used are those based on diisocyanates with aliphatically and/or cycloaliphatically bonded isocyanate groups, or mixtures of such polyisocyanates.

3. Process according to Claim 1, **characterized in that** polyisocyanates A) containing uretdione groups used are those based on 1,6-diisocyanatohexane, 1-isocyanato-3,3,5-trimethyl-5-isocyanato-methylcyclohexane, 2,4'-diisocyanatodicyclohexylmethane and/or 4,4'-diisocyanatodicyclohexylmethane, or mixtures of such polyisocyanates.

4. Process according to Claim 1, **characterized in that** the reaction takes place without solvent.

5. Process according to Claim 1, **characterized in that** bismuth(III) carboxylates are used as catalysts.

6. Process according to Claim 1, **characterized in that** bismuth(III) octoate and/or bismuth(III) neodecanoate are used as catalysts.

7. Process according to Claim 1, **characterized in that** the bismuth-containing catalysts are used in an amount of 0.001% to 2.0% by weight, based on the total amount of starting compounds A) to D) used.

8. Polyaddition products containing uretdione groups, obtainable by the process according to Claim 1.

9. Use of polyaddition products containing uretdione groups according to Claim 8 as starting components in the production of polyurethane plastics.

10. Use of polyaddition products containing uretdione groups according to Claim 8 as crosslinker components for polyurethane baking varnishes.

11. Use of polyaddition products containing uretdione groups according to Claim 8 as crosslinker components for heat-curable polyurethane powder coatings.

12. Use of polyaddition products containing uretdione groups and obtainable by reaction of
A) polyisocyanates containing uretdione groups and having a mean isocyanate functionality of at least 2.0, optionally with concomitant use of
B) other diisocyanates and/or polyisocyanates, different from A, in an amount of up to 70% by weight, based on the total weight of components A) and B), with
C*) polyols of the molecular weight range from 62 - 2000 having a (mean) functionality of at least 2.0, or mixtures of polyols, and optionally
D) other, monofunctional compounds that are reactive towards isocyanate groups, in an amount of up to 40% by weight, based on the total weight of components C*) and D),
while maintaining an equivalent ratio of isocyanate groups to isocyanate-reactive groups of 1.8:1 to 0.6:1, the reaction being carried out in the presence of at least one bismuth-containing catalyst,
in combination with at least one polyol having an OH number of 20 to 40 mg KOH/g and at least one polyol having an OH number of 200 to 300 mg KOH/g, for the production of powder coatings having a matt surface.

## Revendications

1. Procédé pour la préparation de produits de polyaddition contenant des groupes uretdione par transformation de
A) polyisocyanates présentant des groupes uretdione d'une fonctionnalité isocyanate moyenne d'au moins 2,0, le cas échéant avec utilisation conjointe
B) d'autres diisocyanates et/ou polyisocyanates différents de A en une quantité allant jusqu'à 70% en poids, par rapport au poids total des composants A) et B), avec
C) des mélanges de polyols, où il s'agit de mélanges de polyesterdiols de la plage de poids moléculaires de 134 à 1200 avec jusqu'à 80% en poids, par rapport au poids total des polyols (C) utilisés, de diols simples de la plage de poids moléculaires de 62 à 300 et le cas échéant
D) d'autres composés monofonctionnels réactifs par rapport aux groupes isocyanate en une quantité allant jusqu'à 40% en poids, par rapport au poids total des composants C) et D),
en maintenant un rapport d'équivalents de groupes isocyanate aux groupes réactifs par rapport aux groupes isocyanate de 1,8:1 à 0,6:1, où on réalise la transformation en présence d'au moins un catalyseur contenant du bismuth.

2. Procédé selon la revendication 1, **caractérisé en ce qu'**on utilise comme polyisocyanates présentant des groupes uretdione A) ceux à base de diisocyanates avec des groupes isocyanate liés de manière aliphatique et/ou cycloaliphatique ou des mélanges de ces polyisocyanates.

3. Procédé selon la revendication 1, **caractérisé en ce qu'**on utilise comme polyisocyanates présentant des groupes uretdione A) ceux à base de 1,6-diisocyanatohexane, de 1-isocyanato-3,3,5-triméthyl-5-isocyanatométhylcyclohexane, de 2,4'-diisocyanatodicyclohexylméthane et/ou de 4,4'-diisocyanatodicyclohexylméthane ou des mélanges de ces polyisocyanates.

4. Procédé selon la revendication 1, **caractérisé en ce que** la transformation se produit sans solvants.

5. Procédé selon la revendication 1, **caractérisé en ce que** des carboxylates de bismuth (III) sont utilisés comme catalyseurs.

6. Procédé selon la revendication 1, **caractérisé en ce qu'**on utilise de l'octoate de bismuth (III) et/ou du néodécanoate de bismuth (III) comme catalyseurs.

7. Procédé selon la revendication 1, **caractérisé en ce que** les catalyseurs contenant du bismuth sont utilisés en une quantité de 0,001 à 2,0% en poids, par rapport à la quantité totale des composés de départ A) à D) utilisés.

8. Produits de polyaddition contenant des groupes uretdione pouvant être obtenus selon le procédé selon la revendication 1.

9. Utilisation de produits de polyaddition contenant des groupes uretdione selon la revendication 8 comme composants de départ lors de la préparation de matériaux synthétiques à base de polyuréthane.

10. Utilisation de produits de polyaddition contenant des groupes uretdione selon la revendication 8 comme composants de réticulation pour des laques à cuire au four à base de polyuréthane.

11. Utilisation de produits de polyaddition contenant des groupes uretdione selon la revendication 8 comme composants de réticulation pour des laques en poudre à base de polyuréthane thermodurcissables.

12. Utilisation de produits de polyaddition contenant des groupes uretdione, pouvant être obtenus par transformation de
A) polyisocyanates présentant des groupes uretdione d'une fonctionnalité isocyanate moyenne d'au moins 2,0, le cas échéant avec utilisation conjointe
B) d'autres diisocyanates et/ou polyisocyanates différents de A en une quantité allant jusqu'à 70% en poids, par rapport au poids total des composants A) et B), avec
C*) des polyols de la plage de poids moléculaires de 62-2000 présentant une fonctionnalité (moyenne) d'au moins 2,0 ou des mélanges de polyols et le cas échéant D) d'autres composés monofonctionnels réactifs par rapport aux groupes isocyanate en une quantité allant jusqu'à 40% en poids, par rapport au poids total des composants C*) et D),
en maintenant un rapport d'équivalents de groupes isocyanate aux groupes réactifs par rapport aux groupes isocyanate de 1,8:1 à 0,6:1, où on réalise la transformation en présence d'au moins un catalyseur contenant du bismuth,
en combinaison avec au moins un polyol d'un indice OH de 20 à 40 mg KOH/g et au moins un polyol d'un indice OH de 200 à 300 mg KOH/g pour la préparation de revêtements à base de poudre présentant une surface mate.
